# EUROPEAN PATENT APPLICATION

(11) **EP 4 394 097 A1**
(43) Date of publication of application: **03.07.2024**
(21) Application number: 22861324.6
(22) Date of filing: 22.08.2022
(51) Int. Cl.: D01F 4/00

(54) **METHOD FOR PRODUCING PROTEIN MATERIAL WITHOUT USING ORGANIC SOLVENT**

(30) Priority: 26.08.2021 JP 2021137700
(71) Applicant: OSAKA UNIVERSITY, Suita-shi Osaka 565-0871 (JP); Toppan Holdings Inc., Tokyo 110-0016 (JP)
(72) Inventor: MATSUSAKI, Michiya, Suita-shi, Osaka 565-0871 (JP); KANG, Donghee, Suita-shi, Osaka 565-0871 (JP)
(74) Representative: Hoffmann Eitle
(86) International application number: PCT/JP2022/031603
(87) International publication number: WO 2023/027036

(57) **Abstract**

[Problem] To provide a protein material produced by a method in which no organic solvent is used.

[Solution] Provided are: a method for producing a protein material without using an organic solvent, the method comprising ejecting a solution containing a protein material raw material into a water-based medium and drying the ejected protein material raw material; and a protein material produced by the method.

## Description

### Technical Field

The present invention relates to a method for producing a protein material without using an organic solvent and a protein material produced thereby.

### Background Art

Protein materials are used as one-dimensional fibrous materials, two-dimensional sheet-like materials, and three-dimensional steric materials. Protein materials are generally obtained by production methods that use organic solvents, such as a method comprising dispensing a protein solution into an organic solvent (Patent Literature 1). Protein materials produced using organic solvents usually contain organic solvents.

### Citation List

### Patent Literature

Patent Literature 1: Japanese Patent Laid-Open No. 2005-314865

### Summary of Invention

### Technical Problem

However, organic solvents are known to have adverse effects on living organisms or living bodies. Therefore, there is a need for a method for producing protein materials that does not use organic solvents, and protein materials that do not contain organic solvents obtained thereby.

### Solution to Problem

As a result of the intensive research efforts to solve the problem above, the present inventors have surprisingly found that a protein material can be obtained by dispensing a solution containing a protein material raw material into a water-based medium and drying the dispensed protein material raw material, thus completing the present invention. That is, the present invention provides the following.

(1) A method for producing a protein material, the method comprising:
   dispensing a solution containing a protein material raw material into a water-based medium; and
   drying the dispensed protein material raw material.
(2) The method described in (1), wherein the water-based medium does not contain an organic solvent.
(3) The method described in (1) or (2), wherein the temperature of the water-based medium is from 4°C to 53°C.
(4) The method described in any one of (1) to (3), wherein the temperature of the solution containing the protein material raw material is 37°C or lower.
(5) The method described in any one of (1) to (4), wherein the concentration of the protein material raw material is from 0.1 wt% to 5 wt%.
(6) The method described in any one of (1) to (5), wherein the obtained protein material is selected from the group consisting of a fibrous material, a sheet-like material and a steric material.
(7) The method described in any one of (1) to (6), wherein the protein material raw material is selected from the group consisting of type I collagen, type II collagen, type III collagen, type V collagen, type XI collagen, keratin, myosin and elastin.
(8) The method described in (7), wherein the protein material raw material is type I collagen.
(9) The method described in any one of (1) to (8), wherein drying is performed by drying under reduced pressure.
(10) The method described in any one of (1) to (9), wherein the elastic modulus of the obtained protein material is 1 GPa or higher.
(11) The method described in any one of (1) to (10), wherein the elastic modulus of the obtained protein material is 8 GPa or higher.
(12) The method described in any one of (1) to (11), wherein the obtained protein material is for medical use.

### Advantageous Effects of Invention

According to the present invention, a protein material that does not contain an organic solvent can be obtained. Protein materials that do not contain organic solvents have less adverse effects on living organisms or living bodies and are less harmful to the ecosystem, the natural world, or the environment. The method for producing a protein material of the present invention that does not use an organic solvent also has less adverse effects on living organisms or living bodies and less harmful to the ecosystem, the natural world, or the environment.

### Brief Description of Drawings

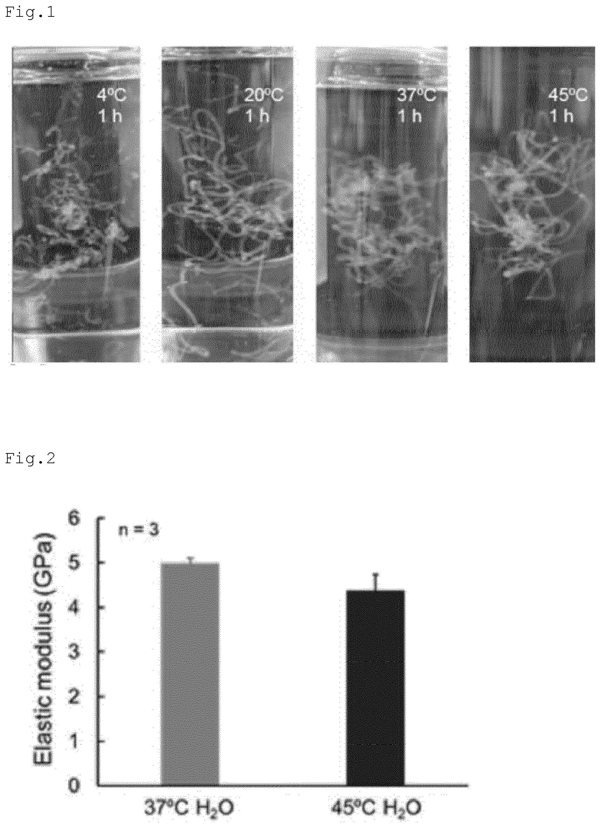

[Figure 1] Figure 1 shows photographs taken 1 hour after dispensing an aqueous solution of 1 wt% collagen into water at 4°C, 25°C, 37°C or 45°C. It was possible to prepare a protein material in water at temperatures of 4°C, 25°C, 37°C and 45°C.
[Figure 2] Figure 2 shows the elastic modulus of collagen fibers prepared in water at 37°C or 45°C. It was possible to prepare a protein material with high elastic modulus in water at 37°C and 45°C.

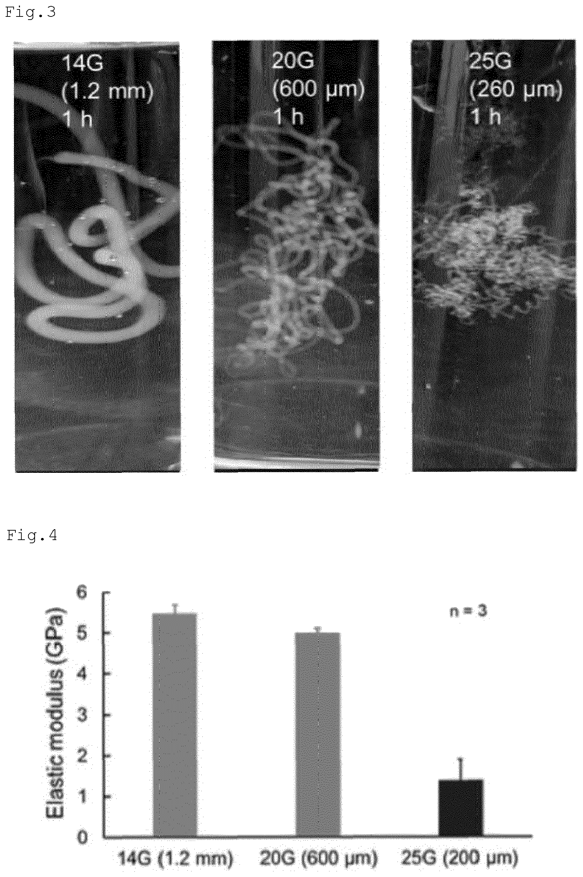

[Figure 3] Figure 3 shows photographs taken 1 hour after injecting an aqueous solution of 1 wt% collagen into water using a syringe pump equipped with a 14, 20 or 25 G needle. The gelation time in water was the same for the 14, 20 and 25 G needles. It was possible to prepare a protein material in water using the syringe pumps equipped with the 14, 20 and 25 G needles.
[Figure 4] Figure 4 shows the elastic modulus of collagen fibers prepared in water using a syringe pump equipped with a 14, 20 or 25 G needle. Using the syringe pumps equipped with the 14 and 20 G needles, it was possible to prepare a protein material having the elastic modulus of approximately 5 GPa.

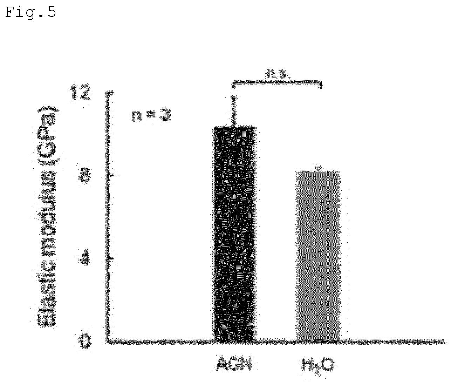

[Figure 5] Figure 5 shows the elastic modulus of collagen fibers prepared in an organic solvent of 60% acetonitrile (ACN) or in water. The elastic modulus of collagen fibers prepared in the organic solvent of 60% acetonitrile (ACN) is 10 GPa, while the elastic modulus of collagen fibers prepared in water is 8 GPa. The elastic modulus of the protein material prepared in water was not significantly different from that of the protein material prepared in acetonitrile (ACN).

### Description of Embodiments

The present invention provides a method for producing a protein material comprising: dispensing a solution containing a protein material raw material into a water-based medium; and drying the dispensed protein material raw material.

The protein material raw material is a protein that has a fibrous structure, and there are many protein material raw materials making up connective tissues, tendons, bones, and skeletal muscles of living bodies. Examples of protein material raw materials include, but are not limited to, collagens, keratins, myosins, elastins, resilins, silk proteins, and amyloids. Families of protein material raw materials are also included. For example, in the case of collagens, types I, II, III, V, XI collagens, atelocollagens and the like are included. The protein material raw material may be derived from any part of any animal. Methods for obtaining and purifying protein material raw materials from living bodies are known. The protein material raw material may be a wild-type protein, may be a mutant protein, or may be a modified protein. The protein material raw material may be extracted from living body tissues or may be artificially produced by methods, such as peptide chemical synthesis or genetic recombination. According to the physical properties, such as the strength and the shape and the chemical and biological properties of the desired protein material, types of the protein material raw material can be selected, or mutations or modifications can be added by known methods.

The solution containing a protein material raw material can be prepared by dissolving the protein material raw material in a solvent. The solution containing the protein material raw material contains substantially no organic solvent or does not contain an organic solvent. The type of the solvent in which the protein material raw material is dissolved is not particularly limited and can be selected according to the type and the concentration of the protein material raw material, the pH and the temperature of the solvent, the temperature of the water-based medium into which the solution containing the protein material raw material is dispensed, the shape and the strength of the protein material, and the like. Examples of the solvent include water, aqueous solutions containing salts, phosphate buffered salines, culture solutions, and mixtures thereof.

The concentration of the protein material raw material in the solution containing the protein material raw material can be selected appropriately according to the type of the protein material raw material, the type, the pH and the temperature of the solvent, the temperature of the water-based medium into which the solution containing the protein material raw material is dispensed, the shape and the strength of the protein material, and the like. The concentration of the protein material raw material may be, for example, 0.1 wt% to 5 wt%, 0.5 wt% to 4 wt%, 0.8 wt% to 3 wt%, 1 wt% to 2 wt%, and the like.

The pH of the solution containing the protein material raw material can be selected appropriately according to the type and the concentration of the protein material raw material, the type and the temperature of the solvent, the temperature of the water-based medium into which the solution containing the protein material raw material is dispensed, the shape and the strength of the protein material, and the like. The pH of the solution may be, for example, pH 6.0 to pH 9.0, pH 6.0 to pH 8.0, pH 7.0 to pH 9.0, pH 7.0 to pH 8.0, pH 7.4, and the like.

The temperature of the solution containing the protein material raw material can be selected appropriately according to the type and the concentration of the protein material raw material, the type and the pH of the solvent, the temperature of the water-based medium into which the solution containing the protein material raw material is dispensed, the shape and the strength of the protein material, and the like. The temperature of the solution may be, for example, 53°C or lower, 37°C or lower, 0°C to 53°C, 4°C to 53°C, 0°C to 50°C, 4°C to 50°C, 0°C to 40°C, 4°C to 40°C, 0°C to 37°C, 4°C to 37°C, 0°C to 30°C, 4°C to 30°C, 0°C to 20°C, 4°C to 20°C, 0°C to 10°C, 4°C to 10°C, 4°C, and the like.

The water-based medium into which the solution containing the protein material raw material is dispensed contains substantially no organic solvent. The concentration of the organic solvent in the water-based medium into which the solution containing the protein material raw material is dispensed is preferably less than 1 volume percent (vol%), less than 0.5 vol%, less than 0.1 vol%, less than 0.05 vol%, less than 0.01 vol%, less than 0.005 vol%, or less than 0.001 vol%. More preferably, the water-based medium into which the solution containing the protein material raw material is dispensed does not contain an organic solvent. To not contain an organic solvent means that no organic solvent is detected using means or methods known to those skilled in the art. Examples of water-based medium into which the solution containing the protein material raw material is dispensed include, but not limited to, ultrapure water, pure water and distilled water. The water-based medium into which the solution containing the protein material raw material is dispensed is, as an embodiment, water. The water-based medium into which the solution containing the protein material raw material is dispensed may contain, for example, inorganic salts, organic salts, proteins, growth factors, organic low molecular weight compounds, inorganic substances, and the like. However, these are the substances that can be dissolved or dispersed in water.

In the present application, the organic solution is, for example, a polar organic solvent. Examples of the organic solvent include acetonitrile, acetone and methanol. The water-based medium into which the solution containing the protein material raw material is dispensed contains substantially no these organic solvents.

The temperature of the water-based medium into which the solution containing the protein material raw material is dispensed can be appropriately selected according to the type and the concentration of the protein material raw material, the type, the pH and the temperature of the solvent, the shape and the strength of the protein material, and the like. The temperature of the water-based medium into which the solution containing the protein material raw material is dispensed may be 53°C or less, 0°C to 53°C, 0°C to 45°C, 0°C to 37°C, 0°C to 25°C, 4°C to 53°C, 4°C to 45°C, 4°C to 37°C, 4°C to 25°C, 10°C to 53°C, 10°C to 45°C, 10°C to 37°C, 10°C to 25°C, 20°C to 53°C, 20°C to 45°C, 20°C to 37°C, 20°C to 25°C, 25°C to 53°C, 25°C to 45°C, 25°C to 37°C, 30°C to 53°C, 30°C to 45°C, 30°C to 37°C, 37°C to 53°C, 37°C to 45°C, 4°C, 25°C, 37°C, 45°C, and the like.

The combination of the temperature of the solution containing protein material raw material and the temperature of the water-based medium into which the solution containing the protein material raw material is dispensed may also be appropriately selected from the above temperatures of the solution containing protein material raw material and the above temperatures of the water-based medium into which the solution containing the protein material raw material is dispensed, respectively, according to the type and the concentration of the protein material raw material, the type and the pH of the solvent, the shape and the strength of the protein material, and the like. The combination of the temperature of the solution containing protein material raw material and the temperature of the water-based medium into which the solution containing the protein material raw material is dispensed may be 0°C to 53°C and 0°C to 53°C, 0°C to 4°C and 25°C to 53°C, 4°C and 4°C to 45°C, 4°C and 37°C to 45°C, and the like.

The protein material produced by the method of the present invention may be applied to all use applications. The protein material may be applied, for example, in the medical field, including regenerative medicine and surgery, or as containers, threads, fabrics, clothing, and the like.

The protein material produced by the method of the present invention does not contain organic solvents, and thus have less adverse effects on living organisms or living bodies and are less harmful to the ecosystem, the natural world, or the environment than protein materials produced using organic solvents. The method of the present invention for producing the protein material without using organic solvents also has less adverse effects on living organisms or living bodies and less adverse effects on the ecosystem, the natural world, or the environment. Furthermore, because the protein material produced by the method of the present invention does not contain organic solvents, even during or after the disposition and disposal of the protein material after use, it has less adverse effects on living organisms or living bodies and is less harmful to the ecosystem, the natural world, or the environment than protein materials produced using organic solvents.

The shape of the protein material produced by the method of the present invention can be varied according to the use applications of the material and other factors. As the shape of the protein material, one-dimensional fibrous materials, two-dimensional sheet-like materials, and three-dimensional steric materials can be cited as examples. Examples of fibrous materials include, but are not limited to, thread-like, rod-like, needle-like, and column-like materials. Examples of sheet-like materials include, but are not limited to, plate-like, film-like materials, and cardiomyocyte sheets. Examples of steric materials include, but are not limited to, vascular, organ-like, spherical, block-like, and container-like materials. Fibers may be intertwined or woven together to increase the strength.

The elastic modulus of the protein material produced by the method of the present invention can be varied according to the use applications of the material and other factors. The elastic modulus of the protein material varies according to the type and the concentration of the protein material raw material, the type, the pH and the temperature of the solvent of the solution containing the protein material raw material, the temperature of the water-based medium into which the solution containing the protein material raw material is dispensed, the type and the concentration of salts included in the water-based medium into which the solution containing the protein material raw material is dispensed, the dispensation speed, and the like.

Dispensation of the solution containing the protein material raw material into the water-based medium can be performed according to known methods, and can be performed, for example, using a nozzle and an injection needle. Typically, the protein material raw material is dispensed as an aqueous solution. Conditions, such as the size and the shape of the dispensation opening and the dispensation speed can be changed according to the type and the concentration of the protein material raw material, the type, the pH and the temperature of the solvent of the solution containing the protein material raw material, the temperature of the water-based medium into which the solution containing the protein material raw material is dispensed, and the shape and the strength of the desired protein material. Examples of the size of the dispensation opening include, but are not limited to, 7G to 33G, 10G to 30G, 7G to 25G, 10G to 25G, 14G to 30G, 14G to 25G, 14G to 20G, 20G to 25G, 14G, 20G and 25G. Alternatively, examples of the size of the dispensation opening include, but are not limited to, 4.0 mm to 80 µm ID, 2.8 mm to 130 µm ID, 4.0 mm to 260 µm ID, 2.8 mm to 260 µm ID, 1.6 mm to 130 µm ID, 1.6 mm to 260 µm ID, 1.6 mm to 600 µm ID, 600 µm to 260 µm ID, 1.6 mm ID, 600 µm ID and 260 µm ID. Examples of the dispensation speed include, but are not limited to, 0.1 mL/min to 100 mL/min, 0.5 mL/min to 50 mL/min, 0.6 mL/min to 30 mL/min, 0.7 mL/min to 10 mL/min, 0.8 mL/min to 8 mL/min, 0.9 mL/min to 5 mL/min, and 1 mL/min, or 0.1 mm/min to 100 mm/min, 0.5 mm/min to 50 mm/min, 0.6 mm/min to 30 mm/min, 0.7 mm/min to 10 mm/min, 0.8 mm/min to 8 mm/min, 0.9 mm/min to 5 mm/min, and 1 mm/min. There may be one dispensation opening, or there may be several ones to dispense a large volume, for example. Dispensation of the solution containing the protein material raw material into the water-based medium may be in any direction, including a horizontal, upward, or downward direction, or a direction with any inclined angle, in the water-based medium into which the solution containing the protein material raw material is dispensed.

Dispensation of the solution containing the protein material raw material may be performed according to known wet spinning methods. The protein material raw material may be dispensed using a combination of a known liquid printing method and a 3D printer to be shaped as a sheet-like material to match, for example, the morphology of a cardiomyocyte sheet, or to be shaped as a steric material to match, for example, the morphology of a blood vessel or an organ.

The solution containing the protein material raw material may be homogenized before the solution containing the protein material raw material is dispensed into the water-based medium. The homogenization of the solution containing the protein material raw material may be performed under cooling, for example, in an ice bath.

The protein material raw material dispensed into the water-based medium may be extended prior to drying. Extension can be performed by known methods. Extension is preferably performed in water or during drying.

The protein material raw material may be crosslinked. Methods for cross-linking are known and include, but are not limited to, cross-linking using crosslinkers, such as formaldehyde, glutaraldehyde, carbodiimide, and cross-linking using transglutaminase. Cross-linking of the protein material raw material can not only increase the strength of the protein material, but also prevent redissolution of the protein material raw material in the aqueous solution.

In the method of the present invention, the dispensed protein material raw material obtained by dispensing the solution containing the protein material raw material into the water-based medium is dried. Drying can be performed by known methods. Air drying, ventilation drying, drying under reduced pressure, and freeze-drying can be used, but methods for drying are not limited thereto. The temperature of drying may be 10°C to 70°C, 10°C to 60°C, 10°C to 50°C, 10°C to 40°C, 10°C to 30°C, 10°C to 20°C, 20°C to 70°C, 20°C to 60°C, 20°C to 50°C, 20°C to 40°C, 20°C to 30°C, 30°C to 70°C, 30°C to 60°C, 30°C to 50°C, 30°C to 40°C, 40°C to 70°C, 40°C to 60°C, 40°C to 50°C, 40°C, 37°C, 35°C, 30°C, 25°C, 20°C, room temperature, and the like. The time of drying may be 10 minutes to 7 days, 10 minutes to 3 days, 10 minutes to 24 hours, 20 minutes to 7 days, 20 minutes to 3 days, 20 minutes to 24 hours, 1 hour to 7 days, 1 hour to 3 days, 1 hour to 24 hours, 3 hours to 24 hours, 6 hours to 24 hours, 9 hours to 24 hours, 12 hours to 24 hours, 18 hours to 24 hours, 1 hour to 18 hours, 3 hours to 18 hours, 6 hours to 18 hours, 9 hours to 18 hours, 12 hours to 18 hours, 1 hours to 12 hours, 3 hours to 12 hours, 6 hours to 12 hours, 9 hours to 12 hours, 1 hour to 9 hours, 3 hours to 9 hours, 6 hours to 9 hours, 1 hour to 6 hours, 3 hours to 6 hours, overnight, 4 hours, 8 hours, 12 hours, 24 hours, and the like.

A protein material having a high elastic modulus can also be obtained by the method of the present invention. The elastic modulus of the protein material obtained by the method of the present invention can be 1 GPa to 3 GPa or higher. In the method of the present invention, a fiber with a higher elastic modulus can be obtained by sufficiently drying the protein material using drying under reduced pressure or other means. In the method of the present invention, the elastic modulus of the protein material can be 4.5 GPa to 8 GPa, 5 GPa to 8 GPa or higher when drying is performed by drying under reduced pressure. The elastic modulus can be measured and calculated using a tensile strength testing equipment. Various tensile strength testing equipment have been designed, are commercially available, and can be used as appropriate.

### Example 1

300 mg of type I collagen derived from a pig skin (provided by NH Foods Ltd.) was placed in 30 mL of 1x phosphate buffered saline solution (PBS) (SIGMA-ALDRICH, D5652-10L, St. Louis, USA) in a 50 mL centrifuge tube (CORNING, 430829, New York, USA) and fibrillated in an ice bath for 6 minutes using a homogenizer with a diameter of 8 mm (AS ONE Bioscience, VH-10, Osaka, Japan) to obtain a 1 wt% collagen aqueous solution. 10 mL of 1 wt% collagen aqueous solution at 4°C was placed in a Terumo syringe (medium mouth), and the syringe equipped with a Top three-way stopcock and a 20G needle was placed in a syringe pump. The solution was spun and cut by every 0.5 mL into 50 mL of ultrapure water at 4, 25, 37, and 45°C in No. 7 sample tube bottles at a spinning speed of 1 mL/min and incubated at each temperature for 1 hour. Then taken out into air, fibers were prepared by performing air-drying for 20 minutes. Subsequently, thermoresponsive collagen fibers were obtained by performing drying under reduced pressure overnight. The prepared fibers were observed on glass slides using a phase contrast microscope, and the tensile modulus was measured using an elastic modulus measuring instrument under the conditions including the area of each fiber, distance between grippers: 40 mm, tensile speed: 1 mm/min, and temperature: 25°C.

Figure 1 shows photographs of the fibers 1 hour after the spinning. It was possible to prepare the fibers in water at 4°C, 25°C, 37°C, and 45°C.

Figure 2 shows the elastic modulus of collagen fibers prepared at 37°C, and 45°C. The elastic modulus of collagen fibers prepared in water at 37°C was 5 GPa, and the elastic modulus of collagen fibers prepared in water at 45°C was 4.5 GPa. No significant difference was observed therebetween.

In Examples below, fibers were prepared in water at 37°C.

### Example 2

10 mL of 1 wt% collagen aqueous solution at 4°C was placed in a Terumo syringe (medium mouth), and the syringe equipped with a Top three-way stopcock and a 14, 20, or 25G needle was placed in a syringe pump. The solution was spun and cut by every 0.5 mL into 50 mL of ultrapure water at 37°C in a sample tube bottle at a spinning speed of 1 mL/min and incubated at 37°C for 1 hour. Then taken out into air, fibers were prepared by performing air-drying for 20 minutes. Subsequently, thermoresponsive collagen fibers were obtained by performing drying under reduced pressure overnight. Tensile modulus of the prepared fibers was measured using an elastic modulus measuring instrument under the conditions including the area of each fiber, distance between grippers: 40 mm, tensile speed: 1 mm/min, and temperature: 25°C.

Figure 3 shows photographs of the fibers 1 hour after the spinning. The gelation time in water was the same for 14, 20 and 25G needles.

Figure 4 shows the elastic modulus of the collagen fibers prepared with various inner diameters of needles. No significant difference was observed between the needles of 14G and 20G with the elastic modulus of 5 GPa, while 25G showed a marked decrease with the elastic modulus of 1.5 GPa.

### Example 3

Fibers were prepared in the same manner as Examples 1 or 2 using 2 wt% collagen aqueous solution at 4°C, ultrapure water at 37°C or 60% acetonitrile (ACN), and a needle of 20G. Tensile modulus of the prepared fibers was measured using an elastic modulus measuring instrument under the conditions including the area of each fiber, distance between grippers: 40 mm, tensile speed: 1 mm/min, and temperature: 25°C.

The elastic modulus of collagen fibers prepared using ultrapure water at 37°C was 8 GPa, and it was not significantly different from the elastic modulus of 10 GPa of collagen fibers prepared using an organic solvent of 60% acetonitrile (ACN) (Figure 5).

### Industrial Applicability

Since the present method is two-dimensionally or three-dimensionally printable, the method can also be used to construct two-dimensional or three-dimensional protein materials.

## Claims

1. A method for producing a protein material, the method comprising:
dispensing a solution containing a protein material raw material into a water-based medium; and
drying the dispensed protein material raw material.

2. The method according to claim 1, wherein the water-based medium does not contain an organic solvent.

3. The method according to claim 1 or 2, wherein the temperature of the water-based medium is from 4°C to 53°C.

4. The method according to any one of claims 1 to 3, wherein the temperature of the solution containing the protein material raw material is 37°C or lower.

5. The method according to any one of claims 1 to 4, wherein the concentration of the protein material raw material is from 0.1 wt% to 5 wt%.

6. The method according to any one of claims 1 to 5, wherein the obtained protein material is selected from the group consisting of a fibrous material, a sheet-like material and a steric material.

7. The method according to any one of claims 1 to 6, wherein the protein material raw material is selected from the group consisting of type I collagen, type II collagen, type III collagen, type V collagen, type XI collagen, keratin, myosin and elastin.

8. The method according to claim 7, wherein the protein material raw material is type I collagen.

9. The method according to any one of claims 1 to 8, wherein drying is performed by drying under reduced pressure.

10. The method according to any one of claims 1 to 9, wherein the elastic modulus of the obtained protein material is 1 GPa or higher.

11. The method according to any one of claims 1 to 10, wherein the elastic modulus of the obtained protein material is 8 GPa or higher.

12. The method according to any one of claims 1 to 11, wherein the obtained protein material is for medical use.
